# EUROPÄISCHE PATENTANMELDUNG

(11) **EP 1 526 421 A2**
(43) Veröffentlichungstag der Anmeldung: **27.04.2005**
(21) Anmeldenummer: 04023756.2
(22) Anmeldetag: 06.10.2004
(51) Int. Cl.: G05B 19/4069

(54) **Verfahren zur Steuerung einer Werkzeugmaschine und Werkzeugmaschinensteuerung**

(30) Priorität: 07.10.2003 DE 10347169
(71) Anmelder: Traub Drehmaschinen GmbH, 73262 Reichenbach (DE)
(72) Erfinder: Monz, Joachim, 73066 Uhingen (DE); Lachner, Armin, 73779 Deizisau (DE)
(74) Vertreter: HOEGER, STELLRECHT & PARTNER Patentanwälte

(57) **Zusammenfassung**

Um ein Verfahren zur Steuerung einer Werkzeugmaschine welche mehrere steuerbare Achsantriebe für die Bewegung mindestens einer Funktionseinheit mindestens eines Teilsystems der Werkzeugmaschine entlang von entsprechenden Bewegungsachsen aufweist, wobei mittels einer manuellen Maschinenbedieneinheit entsprechend einer manuellen Vorgabe von mindestens einer Aktion einer ausgewählten Funktionseinheit über ein Eingabefeld der manuellen Maschinenbedieneinheit von einer Werkzeugmaschinensteuerung Datensätze zu der mindestens einen Aktion der ausgewählten Funktionseinheit erzeugt werden, sicherer und bedienerfreundlicher zu gestalten, wird vorgeschlagen, daß von einer Bedienungsüberprüfungseinheit der Werkzeugmaschinensteuerung die Datensätze zu der der manuellen Maschinenbedieneinheit vorgegebenen mindestens einen Aktion der ausgewählten Funktionseinheit mittels eines Visualisierungssystems in Form eines Maschinenbildes, welches alle für eine Bewegungsmöglichkeit der ausgewählten Funktionseinheit relevanten Einheiten der Werkzeugmaschine als virtuelle Einheiten zusammen mit einer der mindestens einen Funktionseinheit entsprechenden virtuellen Funktionseinheit und die vorgegebene Aktion als virtuelle Aktion zeigt, auf einer Visualisierungseinrichtung dargestellt werden und daß die Datensätze der mindestens einen vorgegebenen Aktion gleichzeitig in einem Aktionenspeicher gespeichert werden.

## Beschreibung

Die Erfindung betrifft ein Verfahren zur Steuerung einer Werkzeugmaschine, welche mehrere steuerbare Achsantriebe für die Bewegung mindestens einer Funktionseinheit mindestens eines Teilsystems der Werkzeugmaschine entlang von entsprechenden Bewegungsachsen aufweist, wobei mittels einer manuellen Maschinenbedieneinheit entsprechend einer manuellen Vorgabe von mindestens einer Aktion einer ausgewählten Funktionseinheit über ein Eingabefeld der manuellen Maschinenbedieneinheit von einer Werkzeugmaschinensteuerung Datensätze zu der mindestens einen Aktion der ausgewählten Funktionseinheit erzeugt werden.

Bei den bislang bekannten Verfahren wurden die Datensätze zu den Aktionen unmittelbar an Achsantriebssteuereinheiten übergeben, um entsprechende reale Aktionen der ausgewählten realen Funktionseinheit einzuleiten.

Bei komplexen Werkzeugmaschinen besteht das Problem, daß für eine Bedienungsperson die komplexen geometrischen Verhältnisse dieser Werkzeugmaschinen nicht in ihrer Gesamtheit erfaßt werden können und somit durch die Gesamtgeometrie nicht zulässige oder sogar zu Kollisionen führende Aktionen seitens der Bedienungsperson der manuellen Maschinenbedieneinheit vorgegeben werden.

Der Erfindung liegt daher die Aufgabe zugrunde, ein Verfahren zur Steuerung einer Werkzeugmaschine sicherer und bedienerfreundlicher zu gestalten.

Diese Aufgabe wird bei einem Verfahren der eingangs beschriebenen Art erfindungsgemäß dadurch gelöst, daß von einer Bedienungsüberprüfungseinheit der Werkzeugmaschinensteuerung die Datensätze zu der der manuellen Maschinenbedieneinheit vorgegebenen mindestens einen Aktion der ausgewählten Funktionseinheit mittels eines Visualisierungssystems in Form eines Maschinenbildes, welches alle für eine Bewegungsmöglichkeit der ausgewählten Funktionseinheit relevanten Einheiten der Werkzeugmaschine als virtuelle Einheiten zusammen mit einer der ausgewählten Funktionseinheit entsprechenden virtuellen Funktionseinheit und die vorgegebene Aktion als virtuelle Aktion zeigt, auf einer Visualisierungseinrichtung dargestellt werden und daß die Datensätze der mindestens einen vorgegebenen Aktion gleichzeitig in einem Aktionenspeicher gespeichert werden.

Der Vorteil der erfindungsgemäßen Lösung ist darin zu sehen, daß mit dieser nunmehr die Bedienungsperson die Möglichkeit hat, die der manuellen Maschinenbedieneinheit vorgegebenen Aktionen in Form von virtuellen Aktionen virtueller Funktionseinheiten im Maschinenbild zu überprüfen, insbesondere daraufhin, ob Kollisionen oder andere Arten von Behinderungen entstehen können, ohne daß die Gefahr besteht, die Werkzeugmaschine oder Werkzeuge zu beschädigen.

Besonders günstig ist es dabei, wenn in einem Testmodus die Bedienungsüberprüfungseinheit aktiviert und die Achsantriebssteuereinheiten der den vorgegebenen Aktionen zugeordneten Bewegungsachsen deaktiviert werden.

Mit einem derartigen Testmodus ist somit zwingend sichergestellt, daß die Bedienungsperson nicht unbeabsichtigterweise gleichzeitig mit der Beobachtung der virtuellen Aktionen der virtuellen Funktionseinheiten eine Bewegung der entsprechenden realen Funktionseinheiten der Werkzeugmaschine zuläßt.

Ein derartiger Testmodus schließt jedoch nicht aus, daß in einem anderen Betriebsmodus, beispielsweise in einem Ausführungsmodus, parallel zur Ausführung der Aktionen als reale Aktion der realen Funktionseinheiten eine Darstellung der Aktionen in Form von virtuellen Aktionen mit virtuellen Funktionseinheiten mittels des Visualisierungssystems erfolgt.

Hinsichtlich der Art der erfindungsgemäß erzeugten Datensätze zu den virtuellen Aktionen wurden bislang keine näheren Angaben gemacht. So könnten beliebige Datensätze erzeugt werden, beispielsweise Vektordatensätze oder ähnliche.

Eine besonders an die bekannten Steuerungskonzepte angepaßte Lösung sieht vor, daß als Datensätze zu den vorgegebenen Aktionen Positionsdaten erzeugt werden.

Hinsichtlich der Abspeicherung derartiger Positionsdaten in dem Aktionsspeicher wurden bislang keine näheren Angaben gemacht. So sieht ein vorteilhaftes Ausführungsbeispiel vor, daß aktuelle Positionsdaten der mit der virtuellen Funktionseinheit durch die virtuellen Aktionen angefahrenen virtuellen Positionen in dem Aktionenspeichers abgespeichert werden.

Der Vorteil dieser Lösung ist darin zu sehen, daß damit eine sehr einfache und wenig Speichervolumen benötigende Datenstruktur vorliegt, mit welcher sich die virtuellen Aktionen zweckmäßig erfassen lassen.

Grundsätzlich bestünde die Möglichkeit, alle Positionsdaten der virtuellen Positionen zu speichern und für die Bedienungsperson zur Weiterverarbeitung zur Verfügung zu halten.

Aus Gründen einer möglichst einfachen Verfahrensführung ist es jedoch vorteilhaft, wenn bei einer Folge von Aktionen die zuletzt vorliegenden Positionsdaten der letzten virtuellen Position ausgewählt und als Endpositionsdaten gespeichert werden.

Damit läßt sich die Menge der zu speichernden Daten reduzieren und insbesondere auch die Verfahrensführung dadurch vereinfachen, daß die Bedienungsperson weiß, daß jeweils die zuletzt eingestellte virtuelle Position hinsichtlich ihrer Positionsdaten erfaßt ist, wobei diese Positionsdaten als Endpositionsdaten gespeichert sind.

Hinsichtlich der Vorgehensweise bei der Auswahl der Endpositionsdaten sind die unterschiedlichsten Lösungen denkbar. So wäre es denkbar, für verschiedenartige Ablaufroutinen die Auswahl automatisch ablaufen zu lassen.

Um jedoch der Bedienungsperson bewußt zu machen, welche virtuelle Position tatsächlich erfaßt werden soll und erfaßt wird, ist vorzugsweise vorgesehen, daß die als Endpositionsdaten zu speichernden Positionsdaten durch einen Auswahlbefehl ausgewählt werden.

Ein derartiger Auswahlbefehl kann in unterschiedlichster Art und Weise erzeugt werden.

Eine Möglichkeit sieht vor, daß die Werkzeugmaschinensteuerung eine Eingabemöglichkeit aufweist, mit welcher der Auswahlbefehl erzeugt wird.

Eine andere Möglichkeit sieht vor, daß von der Maschinenbedieneinheit bei einem Wechsel von einer Bewegungsachse zu einer anderen der Auswahlbefehl erzeugt wird.

Um der Bedienungsperson die Möglichkeit zu geben, die einzelnen durch Beobachtung im Maschinenbild ausgewählten virtuellen Positionen aufeinanderfolgend anfahren zu können, und somit über die manuelle Maschinenbedieneinheit zumindest Programmteile von Steuerungen erstellen zu können, ist vorgesehen, daß in dem Aktionenspeicher eine Sequenz der Endpositionsdaten erstellt wird, so daß sich die einzelnen im Maschinenbild geprüften und ausgewählten virtuellen Positionen nachfolgend in einem Zug anfahren lassen.

Die Sequenz ließe sich dabei durch Anordnung der Endpositionen in unterschiedlicher Reihenfolge generieren.

Um die Reihenfolge, in welcher die von der Bedienungsperson angefahrenen virtuellen und ausgewählten Endpositionen dann durchlaufen wird, zur Vereinfachung des erfindungsgemäßen Verfahrens eindeutig festzulegen, ist vorgesehen, daß in der Sequenz die durch aufeinanderfolgende Auswahlbefehle ausgewählten aktuellen Positionsdaten in einer der Reihenfolge der Auswahlbefehle entsprechenden Reihenfolge von Endpositionsdaten niedergelegt werden.

Um die durch die Sequenz der Endpositionsdaten festgelegten Aktionen nacheinander ohne Einwirken der Bedienungsperson ablaufen lassen zu können, ist bei einer vorteilhaften Ausführungsform des erfindungsgemäßen Verfahrens vorgesehen, daß die Sequenz der Endpositionsdaten durch einen Übergabebefehl einer zur Abarbeitung von Werkzeugmaschinensteuerungsprogrammen vorgesehenen zentralen Prozessoreinheit der Werkzeugmaschinensteuerung übergeben wird, die dann in der Lage ist, die Sequenz der Endpositionsdaten analog den in einem üblichen Werkzeugmaschinensteuerungsprogramm erzeugten Endpositionsdaten abzuarbeiten, wobei dieses Abarbeiten entweder automatisch oder auch im Handbetrieb erfolgen kann.

Hinsichtlich des Verfahrens bei der Speicherung der Positionsdaten im einzelnen innerhalb des Aktionenspeichers wurden bislang keine näheren Angaben gemacht. So sieht eine vorteilhafte Lösung vor, daß der Aktionenspeicher einen Positionsdatenpuffer umfaßt, in welchen die Positionsdaten der durch die virtuellen Aktionen angefahrenen virtuellen Positionsdaten als aktuelle Positionsdaten gespeichert werden.

Ferner ist vorzugsweise vorgesehen, daß der Aktionenspeicher einen sequentiellen Speicher umfaßt, in welchem bei einem Auswahlbefehl die zuletzt im Positionsdatenpuffer gespeicherten aktuellen Positionsdaten als Endpositionsdaten abgespeichert werden.

Vorzugsweise ist der sequentielle Speicher dabei so ausgebildet, daß die bei aufeinanderfolgenden Auswahlbefehlen gespeicherten Endpositionsdaten der Sequenz aufeinanderfolgend gespeichert werden.

Hinsichtlich der Verarbeitung der Sequenz der Endpositionsdaten in der Prozessoreinheit wurden bislang keine näheren Angaben gemacht. So sieht ein vorteilhaftes Ausführungsbeispiel vor, daß die Sequenz von Endpositionsdaten in einem Zwischenspeicher der zentralen Prozessoreinheit gespeichert wird, wobei dieser Zwischenspeicher zweckmäßigerweise der Zwischenspeicher ist, der bei der zentralen Prozessoreinheit auch für die Abarbeitung von im Zusammenhang mit üblichen Steuerungsprogrammen erzeugten Endpositionsdaten eingesetzt wird und von welchem dann gegebenenfalls nach einer Interpolation die Datensätze zu den Endpositionsdaten, beispielsweise in Form von achsbezogenen Zielpositionsdaten erzeugt und den Achsantriebssteuereinheiten übergeben werden.

Um die durch die Endpositionsdaten festgelegten Aktionen aufeinanderfolgend nachvollziehen zu können, ist gemäß dem erfindungsgemäßen Verfahren vorgesehen, daß die der zentralen Prozessoreinheit in der Sequenz übergebenen Endpositionsdaten von dieser selbsttätig entsprechend der Reihenfolge in der Sequenz abgearbeitet werden.

Vorzugsweise werden dann dabei von der Prozessoreinheit die von dieser erzeugten Datensätze der Bedienungsüberprüfungseinrichtung zur Darstellung virtueller Aktionen der virtuellen Funktionseinheiten mittels des Visualisierungssystems übermittelt.

Alternativ oder ergänzend dazu ist vorgesehen, daß von der zentralen Prozessoreinheit durch Übergabe der erzeugten Datensätze an die Achsantriebssteuereinheiten die realen Funktionseinheiten entsprechend realen Funktionen bewegt werden.

Darüber hinaus wird die erfindungsgemäße Aufgabe auch durch eine Werkzeugmaschinensteuerung gelöst, welche mehrere steuerbare Achsantriebe für die Bewegung mindestens einer Funktionseinheit mindestens eines Teilsystems einer Werkzeugmaschine entlang von entsprechenden Bewegungsachsen aufweist, wobei die Werkzeugmaschinensteuerung eine zentrale Prozessoreinheit zur Abarbeitung eines Werkzeugmaschinensteuerungsprogramms für die Werkzeugmaschine, mindestens eine der zentralen Prozessoreinheit zugeordnete Speichereinheit, Achsantriebseinheiten für jeden der Achsantriebe sowie eine manuelle Maschinenbedieneinheit zur Erzeugung von Datensätzen zu mindestens einer Aktion einer ausgewählten Funktionseinheit mittels der Werkzeugmaschinensteuerung entsprechend einer manuellen Vorgabe der mindestens einen Aktion der ausgewählten Funktionseinheit über ein Eingabefeld der manuellen Maschinenbedieneinheit aufweist, und wobei erfindungsgemäß die Werkzeugmaschinensteuerung eine Bedienungsüberprüfungseinheit aufweist, welche die Datensätze zu der der manuellen Maschinenbedieneinheit vorgegebenen mindestens einen Aktion der ausgewählten Funktionseinheit mittels eines Visualisierungssystems in Form eines Maschinenbildes, welches alle für die Bewegungsmöglichkeit der ausgewählten Funktionseinheit relevanten Einheiten der Werkzeugmaschine als virtuelle Einheiten zusammen mit einer der ausgewählten Funktionseinheit entsprechenden virtuellen Funktionseinheit und die vorgegebene Aktion als virtuelle Aktion zeigt, auf einer Visualisierungseinrichtung darstellt und die Datensätze zu den virtuellen Aktionen gleichzeitig in einem Aktionenspeicher speichert.

Der Vorteil dieser Lösung ist darin zu sehen, daß mit dieser ebenfalls die Möglichkeit besteht, manuell Aktionen vorzugeben, diese jedoch nicht sofort durch die realen Funktionseinheiten als reale Aktionen auszuführen, sondern zunächst durch die Bedienungsüberprüfungseinrichtung mittels des Visualisierungssystems derselben darzustellen und somit überprüfen zu können, wobei gleichzeitig die Datensätze erfaßt werden und somit in einfacher Weise die mit den virtuellen Funktionseinheiten über virtuelle Aktionen angefahrenen virtuellen Positionen festgehalten werden können.

Besonders günstig läßt sich die erfindungsgemäße Lösung dann realisieren, wenn die Werkzeugmaschinensteuerung einen Testmodus aufweist, in welchem die Bedienungsüberprüfungseinheit aktiviert und die Achsantriebssteuereinheiten der zugeordneten Bewegungsachsen deaktiviert sind. Durch einen derartigen Testmodus läßt sich sicherstellen, daß keine unbeabsichtigte Bewegung realer Funktionseinheiten mit realen Aktionen erfolgt.

Ein derartiger Testmodus läßt sich besonders einfach dann in der Werkzeugmaschinensteuerung realisieren, wenn die Bedienungsüberprüfungseinrichtung und die Achsantriebssteuereinheiten über eine Datenweiche alternierend aktivierbar sind.

Hinsichtlich der Erfassung der manuellen Maschinenbedieneinheit vorgegebenen Aktionen im Aktionsspeicher wurden bislang keine näheren Angaben gemacht. So sieht eine vorteilhafte und hinsichtlich der anfallenden Datenmenge geeignete Lösung vor, daß der Aktionenspeicher aktuelle Positionsdaten der mit der virtuellen Funktionseinheit durch die virtuellen Aktionen angefahrenen virtuellen Positionen erfaßt.

Um durch die aktuellen Positionsdaten anfallenden Datenmengen noch weiter zu reduzieren und alle Informationen über Aktionen, die nicht zu einer von der Bedienungsperson ausgewählten virtuellen Position geführt haben, zu unterdrücken, ist vorzugsweise vorgesehen, daß bei einer Folge von virtuellen Aktionen die zuletzt vorliegenden aktuellen Positionsdaten der virtuellen Position ausgewählt und als Endpositionsdaten gespeichert werden.

Damit verbleiben in dem Aktionsspeicher lediglich die Informationen über virtuelle Position, die von der Bedienungsperson zuletzt angefahren wurde, so daß die Bedienung der erfindungsgemäßen Werkzeugmaschinensteuerung für die Bedienungsperson sehr einfach ist, da sie davon ausgehen kann, daß die zuletzt angefahrene virtuelle Position in dem Aktionenspeicher gespeichert ist und alle vorangehenden virtuellen Positionen als irrelevant betrachtet werden.

Die Auswahl der aktuellen Positionsdaten könnte dabei durch spezielle interne Auswahlroutinen erfolgen.

Eine sehr einfache und für die Bedienungsperson leicht überschaubare Lösung sieht jedoch vor, daß die als Endpositionsdaten zu speichernden aktuellen Positionsdaten durch einen Auswahlbefehl auswählbar sind.

Der Auswahlbefehl kann dabei in unterschiedlichster Weise erzeugt werden.

Eine vorteilhafte Lösung sieht vor, daß die Werkzeugmaschinensteuerung eine Eingabemöglichkeit zur Erzeugung des Auswahlbefehls aufweist, so daß die Bedienungsperson diesen Auswahlbefehl explizit eingeben kann.

Alternativ oder ergänzend hierzu ist vorgesehen, daß die Maschinenbedieneinheit bei einem Wechsel von einer Bewegungsachse zu einer anderen den Auswahlbefehl erzeugt, so daß die Bedienungsperson davon ausgehen kann, daß bei Erreichen einer virtuellen Position und nachfolgendem Wechsel der Bewegungsachse zwangsläufig die aktuellen Positionsdaten dieser virtuellen Position ausgewählt sind und in dem Aktionenspeicher gespeichert sind.

Zur Weiterverarbeitung der Endpositionsdaten ist es besonders günstig, wenn der Aktionenspeicher eine Sequenz der Endpositionsdaten erstellt.

Zweckmäßigerweise ist die Sequenz so ausgebildet, daß in dieser die durch aufeinanderfolgende Auswahlbefehle ausgewählten aktuellen Positionsdaten in einer der Reihenfolge der Auswahlbefehle entsprechenden Reihenfolge von Endpositionsdaten angeordnet sind.

Um die Endpositionsdaten dazu einsetzen zu können, daß die von der Bedienungsperson ausgewählte virtuelle Position oder die ausgewählten virtuellen Positionen selbsttätig von der Werkzeugmaschinensteuerung angefahren werden, ist vorgesehen, daß die Sequenz der Endpositionsdaten durch einen Übergabebefehl der zur Abarbeitung von Werkzeugmaschinensteuerungsprogrammen vorgesehenen zentralen Prozessoreinheit der Werkzeugmaschinensteuerung übergebbar ist.

Hinsichtlich der Ausbildung des Aktionenspeichers im einzelnen wurden im Zusammenhang mit der bisherigen Erläuterung der einzelnen Ausführungsbeispiele keine näheren Angaben gemacht. So sieht eine besonders günstige Lösung vor, daß der Aktionenspeicher einen Positionsdatenpuffer umfaßt, mit welchem die aktuellen Positionsdaten der durch die virtuellen Aktionen angefahrenen virtuellen Positionen speicherbar sind.

Ferner sieht eine besonders günstige Ausführungsform des Aktionenspeichers vor, daß dieser einen sequentiellen Speicher umfaßt, in welchem bei einem Auswahlbefehl die zuletzt im Positionsdatenpuffer gespeicherten aktuellen Positionsdaten abspeicherbar sind.

Vorzugsweise ist dabei der sequentielle Speicher so ausgebildet, daß die bei aufeinanderfolgenden Auswahlbefehlen gespeicherten Positionsdaten in der Sequenz der Endpositionsdaten aufeinanderfolgend gespeichert sind.

Hinsichtlich der Ausbildung der zentralen Prozessoreinheit selbst wurden bislang keine näheren Angaben gemacht. So sieht eine vorteilhafte Lösung vor, daß die zentrale Prozessoreinheit einen Zwischenspeicher zur Aufnahme von abzuarbeitenden Endpositionsdaten umfaßt.

Dieser Zwischenspeicher wird vorzugsweise so eingesetzt, daß dies der Zwischenspeicher der zentralen Prozessoreinheit ist, in welchem auch die im Rahmen üblicher Steuerungsprogramme ermittelten Endpositionen abgespeichert und dann zur Steuerung der Funktionseinheiten abgearbeitet werden.

Vorzugsweise ist daher vorgesehen, daß die zentrale Prozessoreinheit die in dem Zwischenspeicher abgespeicherten Endpositionen selbsttätig abarbeitet.

Weitere Merkmale und Vorteile der Erfindung sind Gegenstand der nachfolgenden Beschreibung sowie der zeichnerischen Darstellung eines Ausführungsbeispiels eines erfindungsgemäßen Verfahrens im Zusammenhang mit einer erfindungsgemäßen Werkzeugmaschinensteuerung.

In der Zeichnung zeigen:
- Fig. 1: eine schematische Darstellung einer realen Werkzeugmaschine mit realen Teilsystemen und realen Funktionseinheiten;
- Fig. 2: eine schematische Darstellung eines Aufbaus einer erfindungsgemäßen Werkzeugmaschinensteuerung und
- Fig. 3: ein beispielhaftes Ablaufschema für ein erfindungsgemäßes Verfahren.

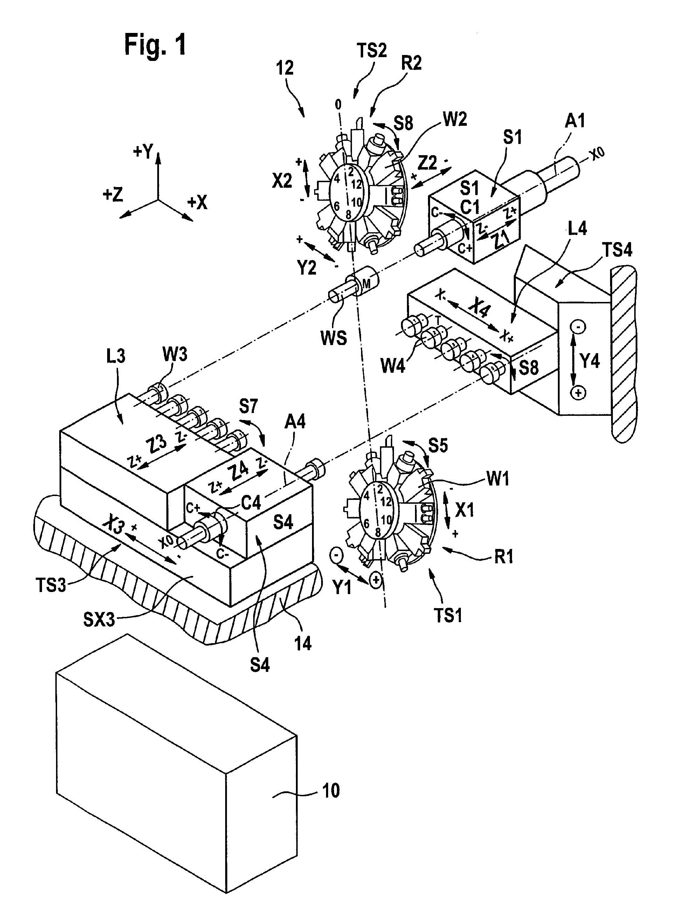

Eine in Fig. 1 dargestellte und als Ganzes mit 10 bezeichnete Werkzeugmaschinensteuerung für eine erfindungsgemäße Werkzeugmaschine 12 dient dazu, die Position verschiedener komplexer Einheiten bei der Steuerung der Werkzeugmaschine 12 zu berücksichtigen.

So umfaßt beispielsweise die Werkzeugmaschine 12 ein erstes Teilsystem TS1 mit einem Revolver R1 als Funktionseinheit, der in Richtung zweier Bewegungsachsen, nämlich der Achsen X1 und Y1 mittels eines zeichnerisch allerdings nicht dargestellten Achsantriebs verfahrbar ist.

Darüber hinaus ist bei dem Revolver R1 noch eine Schaltachse S5 zu steuern, welche dazu dient, unterschiedliche Werkzeuge W1 des Revolvers R1 in eine durch eine gestrichelte Linie dargestellte Arbeitsposition zu bringen.

Darüber hinaus umfaßt das Teilsystem TS1 noch als weitere Funktionseinheit eine Spindel S1, welche zwei Bewegungsachsen aufweist, nämlich eine Achse Z1, längs welcher die Spindel S1 parallel zu Ihrer Spindelachse A1 bewegbar ist und eine sogenannte C-Achse C1, entsprechend welcher die Spindel S1 in beliebigen Drehstellungen um die Spindelachse A1 positionierbar ist.

Ein Teilsystem TS2 der Werkzeugmaschine 12 umfaßt einen Revolver R2 als Funktionseinheit, der längs dreier Bewegungsachsen, nämlich längs der Achsen X2, Y2 und Z2 bewegbar ist.

Ein weiteres Teilsystem TS3 umfaßt als Funktionseinheit einen Linearwerkzeugträger L3, der entlang zweier Bewegungsachsen, nämlich entlang der Achsen X3 und Z3 bewegbar ist.

Die Funktionseinheiten R1, S1, R2 und L3 der Teilsysteme TS1, TS2 und TS3 dienen nun dazu, ein Werkstück WS, welches in der Spindel S1 aufgenommen ist, gleichzeitig zu bearbeiten.

Darüber hinaus umfaßt die Werkzeugmaschine 12 noch ein Teilsystem TS4, umfassend einen Linearwerkzeugträger L4 als Funktionseinheit, der längs zweier Bewegungsachsen nämlich einer Achse X4 und einer Achse Y4 bewegbar ist.

Zum Teilsystem TS4 gehört außerdem noch eine Werkstückspindel S4, die längs einer Bewegungsachse Z4 bewegbar ist, und außerdem noch um eine C-Achse C4 in beliebigen Drehstellungen um die Spindelachse A4 der Spindel S4 drehbar ist.

Die Werkstückspindel S4 sitzt jedoch nicht unmittelbar auf einem Maschinengestell, sondern auf einem in Richtung der Achse X3 bewegbaren X-Schlitten XS3 zur Bewegung der Funktionseinheit L3 mittels des Teilsystems TS3.

Die in Fig. 1 beispielhaft dargestellte Werkzeugmaschine zeigt, daß bei einer manuellen Ansteuerung einer der Funktionseinheiten R1, S1, R2, L3, L4 und S4 komplexe Zusammenhänge berücksichtigt werden müssen, die sich nicht nur aus der Position der jeweiligen Funktionseinheiten R1, S1, R2, L3, L4 und S4 selbst ergeben, sondern auch aus der räumlichen Ausdehnung der Funktionseinheiten R1, S1, R2, L3, L4 und S4 unter Berücksichtigung der Erstreckung der Werkzeuge W1, W2, W3, W4 sowie aller übrigen Einheiten der Werkzeugmaschine, wie beispielsweise der räumlichen Ausdehnung des Maschinengestells 14 und der räumlichen Ausdehnung von Schlittensystemen für die Ausführung der Bewegung längs der einzelnen Bewegungsachsen.

Bei einer manuellen Steuerung der Werkzeugmaschine 12 ist es somit nicht nur ausreichend, die räumliche Bewegung des gerade zu positionierenden Werkzeugs W relativ zum Werkstück WS zu berücksichtigen, sondern die gesamte räumliche Ausdehnung aller Funktionseinheiten R1, S1, R2, L3, L4 und S4 sowie die räumliche Ausdehnung auch noch aller übrigen eine Bewegung dieser Funktionseinheiten begrenzenden Einheiten der Werkzeugmaschine.

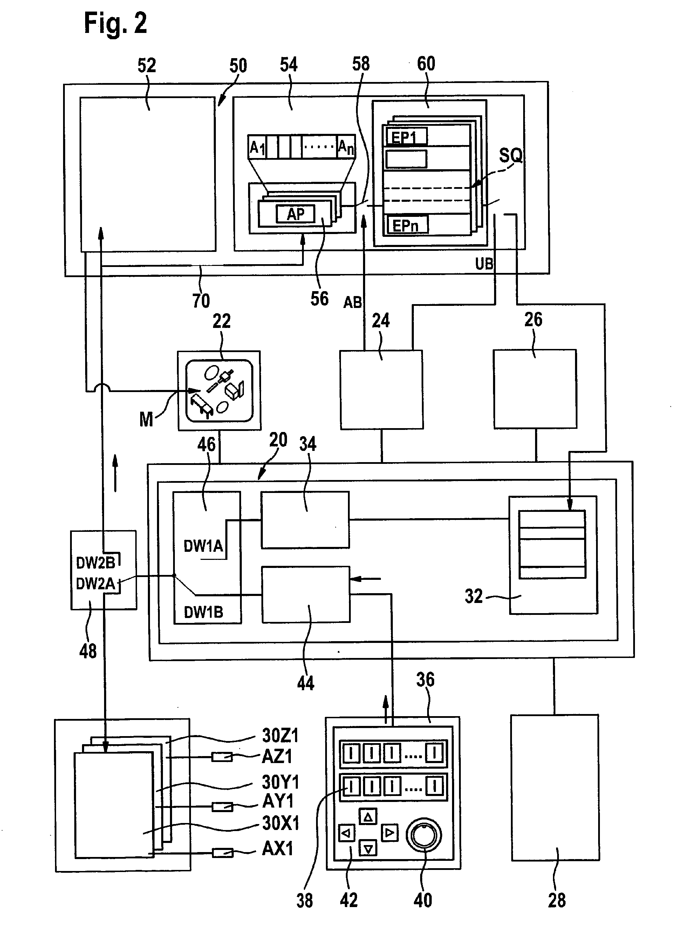

Eine Werkzeugmaschinensteuerung 10 zur Durchführung einer manuellen Steuerung einer derartigen Werkzeugmaschine umfaßt daher, wie schematisch in Fig. 2 dargestellt, eine zentrale Prozessoreinheit 20, welcher eine Visualisierungseinheit 22, beispielsweise in Form eines Bildschirms eine Tastatur 24, beispielsweise ausgebildet als alphanumerische Tastatur, einen Arbeitsspeicher 26, einen nicht flüchtiger Hintergrundspeicher 28 sowie Achsantriebssteuereinheiten 30 für die Ansteuerung der Achsantriebe A der jeweiligen Bewegungsachsen zugeordnet, wobei beispielsweise in Fig. 2 die Achsantriebssteuereinheiten 30X1, 30Y1 und 30Z1 und die Achsantriebe AX1, AY1 und AZ1 schematisch dargestellt sind.

Mit dieser Konfiguration ist die erfindungsgemäße Werkzeugmaschinensteuerung 10 bereits in der Lage, übliche Werkzeugmaschinensteuerungsprogramme, gespeichert im Arbeitsspeicher 26 abzuarbeiten, wobei bei einer derartigen Abarbeitung üblicher Werkzeugmaschinensteuerungsprogramme vor Ansteuerung der Achsantriebssteuereinheiten 30 Endpositionsdaten in einem Zwischenspeicher 32 der zentralen Prozessoreinheit 20 erzeugt werden, die Zielpositionen für die Bewegungsachsen, beispielsweise die Bewegungsachsen 30X1, 30Y1 und 30Z1, darstellen.

Diese Endpositionsdaten aus dem Zwischenspeicher 32 werden nachfolgend in einem in der zentralen Prozessoreinheit 20 vorgesehenen Interpolator 34 dann, wenn kombinierte Bewegungen in mehreren Bewegungsachsen, beispielsweise eine kombinierte Bewegung in Richtung der Bewegungsachsen X1 und Y1, durchgeführt werden sollen, interpoliert, so daß die zentrale Prozessoreinheit (20) Datensätze erzeugt, in denen Zielpositionsdaten für die einzelnen Bewegungsachse getrennt vorliegen und dann diese nach den einzelnen Bewegungsachsen getrennten Zielpositionsdaten den Achsantriebssteuerungen, beispielsweise den Achsantriebssteuerungen 30X1 und 30Y1, übergibt, um die entsprechenden Achsantriebe so zu bewegen, daß die Zielpositionen erreicht werden.

Um eine manuelle Maschinenbedienung zu ermöglichen, insbesondere einer Bedienungsperson zu ermöglichen, mögliche Bewegungen einzelner der Funktionseinheiten R1, S1, R2, L3, L4 und S4 auszutesten, ist der zentralen Prozessoreinheit 20 noch eine manuelle Maschinenbedieneinheit 36 zugeordnet, welche ein Tastenfeld 38, beispielsweise zur Auswahl von Bewegungsachsen sowie ein Handrad 40 und Richtungstasten 42 aufweist.

Sowohl mit dem Handrad 40 als auch mit den Richtungstasten 42 kann manuell eine Aktion einer der Funktionseinheiten R1, S1, R2, L3, L4, S4 längs einer der beispielsweise mit dem Tastenfeld 38 ausgewählten Bewegungsachsen vorgegeben werden. Die vorgegebene Aktion ist dabei eine Bewegung in "Vorwärtsrichtung" oder "Rückwärtsrichtung" der jeweiligen Bewegungsachse, wobei der Weg, über welchen diese Aktion erfolgt, durch mehr oder weniger starkes Drehen des Handrades 40 oder mehr oder weniger langes Drücken der Richtungstasten 42 bestimmbar ist.

Die der manuellen Maschinenbedieneinheit 36 mittels des Handrads 40 oder der Richtungstasten 42 vorgegebenen Aktionen werden von dieser zusammen mit einer in der zentralen Prozessoreinheit 20 vorgesehenen Datenanpasseinheit 44 ebenfalls in Datensätze, umfassend achsbezogene Zielpositionsdaten für die einzelnen Bewegungsachsen, umgesetzt, welche in gleicher Weise wie die vom Interpolator 34 erzeugten Datensätze der Achsantriebssteuereinheit 30 übergeben werden können.

Um der zentralen Prozessoreinheit 20 vorzugeben, ob Datensätze des Interpolators 34 oder Datensätze der Datenanpasseinheit 44 den Achsantriebssteuereinheiten 30 übergeben werden sollen, ist in dem zentralen Prozessor 20 eine erste Datenweiche 46 vorgesehen, welche in einer Stellung DW1A die vom Interpolator 34 erzeugten Datensätze auswählt oder in einer Stellung DW1B die von der Datenanpasseinheit 44 erzeugten Datensätze auswählt.

Erfindungsgemäß werden nun von der ersten Datenweiche 46 die Datensätze nicht zwangsläufig den Achsantriebssteuereinheiten 30 übergeben, sondern es ist auf die erste Datenweiche 46 folgend eine zweite Datenweiche 48 vorgesehen, welche in einer Stellung DW2A die von der ersten Datenweiche 46 ausgewählten Datensätze den Achsantriebssteuereinheiten 30 übergibt, allerdings in einer Stellung DW2B die von der ersten Datenweiche 46 ausgewählten Datensätze einer als Ganzes mit 50 bezeichneten Bedienungsüberprüfungseinheit übergibt.

Die Bedienungsüberprüfungseinheit 50 umfaßt ein Visualisierungssystem 52, welches in der Lage ist, mit der Visualisierungseinheit 22 zusammen, im einfachsten Fall auf deren Bildschirm, ein Maschinenmodel M darzustellen, welches die Funktionseinheiten R1, S1, R2, L3, L4 und S4 als virtuelle Funktionseinheiten und die den Datensätzen entsprechenden Aktionen als virtuelle Aktionen zeigt, sondern die virtuellen Funktionseinheiten entsprechend den räumlichen Abmessungen der Funktionseinheiten R1, S1, R2, L3, L4 und S4 mitsamt entsprechenden Werkzeugen W in Verbindung mit räumlichen Abmessungen aller übrigen, für die Bewegung dieser Funktionseinheiten relevanten Einheiten der Werkzeugmaschine 12, ebenfalls durch Darstellung derselben als virtuelle Einheiten, abbildet.

Ein dieses leistendes Visualisierungssystem ist in der EP 0 902 343 der Anmelderin beschrieben und auf die Beschreibung dieses Visualisierungssystems in den Absätzen [0089] bis [0155] wird bezüglich des Aufbaus und der Arbeitsweise dieses Visualisierungssystems vollinhaltlich Bezug genommen und diese Passagen werden hiermit zum Gegenstand der Beschreibung gemacht.

Aufgrund dieses Visualisierungssystems 52 ist der Benutzer nun in der Lage, auf der Visualisierungseinheit 22 virtuelle Aktionen zu beobachten, die entweder den vom Interpolator 34 erzeugten Datensätzen entsprechen oder den von der Datenanpasseinheit 44 erzeugten Datensätzen.

Insbesondere besteht für eine Bedienungsperson somit die Möglichkeit, bei einer Stellung der ersten Datenweiche 46 in der Stellung DW1B und einer Stellung der zweiten Datenweiche 48 in der Stellung DW2B die der manuellen Maschinenbedieneinheit 36 entweder über das Handrad 40 oder die Richtungstasten 42 vorgegebenen Aktionen als virtuelle Aktionen von den realen Funktionseinheiten R1, S1, R2, L2, L4, S4 entsprechenden virtuellen Funktionseinheiten im Rahmen des Maschinenbildes M zu folgen, wobei das Maschinenbild M der Bedienungsperson sämtliche Informationen liefert, die wesentlich sind, um zu erkennen, ob bei einer virtuellen Aktion einer der virtuellen Funktionseinheiten im Fall einer realen Aktion einer realen Funktionseinheit eine räumliche Kollision auf der Werkzeugmaschine 12 oder auch eine Funktionseinschränkung einer anderen Funktionseinheit eintreten würde.

Darüber hinaus umfaßt die Bedienungsüberprüfungseinheit 50 auch noch einen Aktionenspeicher 54, welcher die Datensätze, die das Visualisierungssystem 52 in virtuelle Aktionen auf der Visualisierungseinheit 22 umsetzt, in Form aktueller Positionsdaten AP von virtuellen Endpositionen der virtuellen Funktionseinheiten speichert.

Vorzugsweise umfaßt der Aktionenspeicher 54 einen Positionsdatenpuffer 56, welcher die jeweiligen aktuellen Positionsdaten AP speichert.

Die Bedienungsperson ist nun in der Lage, beispielsweise einer ausgewählten Bewegungsachse einer Bewegungseinheit Aktionen, das heißt Bewegungen in eine bestimmte Richtung, vorzugeben und diese als virtuelle Aktionen der virtuellen Funktionseinheit im Maschinenbild M zu beobachten, bis die vorgegebenen Aktionen zu einer virtuellen Position der virtuellen Funktionseinheit geführt haben, welche die Bedienungsperson als geeignet ansieht und daher auswählen möchte.

Durch einen Auswahlbefehl AB, beispielsweise eingegeben über die Tastatur 24 können nun die dieser ausgewählten virtuellen Position entsprechenden aktuellen Positionsdaten AP aus dem Positionsdatenpuffer 56 ausgelesen und in einen sequentiellen Speicher 60 übernommen werden, welcher diese aktuellen Positionsdaten als Endpositionsdaten EP einer Endposition speichert.

Möchte dann die Bedienungsperson ausgehend von dieser ausgewählten virtuellen Position der durch die virtuelle Aktion bewegten virtuellen Funktionseinheit längs einer Achse eine weitere virtuelle Aktion durchführen, beispielsweise durch Bewegung derselben Funktionseinheit längs einer anderen Bewegungsachse oder der Bewegung einer anderen Funktionseinheit längs einer von deren Bewegungsachsen, so wird diese Aktion ebenfalls wiederum der manuellen Maschinenbedieneinheit 36 vorgegeben und mittels der entsprechenden virtuellen Funktionseinheit als entsprechende virtuelle Aktion ebenfalls im Zusammenhang mit dem Maschinenbild M auf der Visualisierungseinheit 22 dargestellt und gleichzeitig werden die aktuellen Positionsdaten in dem Positionsdatenpuffer 56 gepuffert.

Die Bedienungsperson kann in gleicher Weise wie beschrieben verschiedene Aktionen der manuellen Maschinenbedieneinheit 36 vorgeben und dann die Positionsdaten der im Rahmen dieser Aktionen erreichten virtuellen Position der Funktionseinheit ebenfalls durch den Auswahlbefehl AB auswählen und von dem Positionsdatenpuffer 56 als Endpositionsdaten EP einer weiteren Endposition in den sequentiellen Speicher 60 übernehmen.

Der sequentielle Speicher 60 weist somit eine Sequenz SQ von durch Auswahlbefehle AB nacheinander erfaßter Endpositionsdaten von Endpositionen, beispielsweise EP1 bis EPn, auf.

Diese Sequenz SQ von Endpositionsdaten EP1 ... EPn kann nun durch einen Übergabebefehl UB, beispielsweise ebenfalls eingegeben über die Tastatur 24, mittels eines durch den Übergabebefehl UB aktivierten zweiten Datenschalters 62 in den Zwischenspeicher 32 der zentralen Prozessoreinheit 20 übergeben werden und steht nun dem Zwischenspeicher 32 als Sequenz SQ von Endpositionsdaten EP in gleicher Weise wie eine von der zentralen Prozessoreinheit 20 im Rahmen der Abarbeitung eines üblichen Steuerprogramms erzeugte Sequenz von Endpositionsdaten zur weiteren Abarbeitung zur Verfügung.

Mit dieser Sequenz von Endpositionsdaten EP im Zwischenspeicher 32 kann nun die zentrale Prozessoreinheit 20 in gleicher Weise wie bei der üblichen Abarbeitung eines Steuerprogramms gegebenenfalls mittels des Interpolators 34 achsbezogene Zielpositionsdaten umfassende Datensätze ermitteln, die dann bei Stellung der ersten Datenweiche 46 in der Stellung DW1A und Stellung der zweiten Datenweiche 48 in der Stellung DW2B nochmals der Bedienungsüberprüfungseinheit 50 übermittelt werden können, um diese durch Visualisierung der entsprechenden virtuellen Aktionen der virtuellen Funktionseinheiten im Maschinenbild M zu überprüfen. Um zu verhindern, daß die Endpositionen in den Aktionsspeicher 54 übernommen werden, ist ein Datenschalter 70 vorgesehen, der in diesem Fall geöffnet werden kann.

Ist die Überprüfung positiv, so kann die Sequenz SQ im Zwischenspeicher 32 durch Umschalten der zweiten Datenweiche 48 in die Stellung DW2A zur tatsächlichen Bewegung realer Funktionseinheiten mit realen Aktionen, gesteuert durch die Achsantriebssteuereinheiten 30, eingesetzt werden.

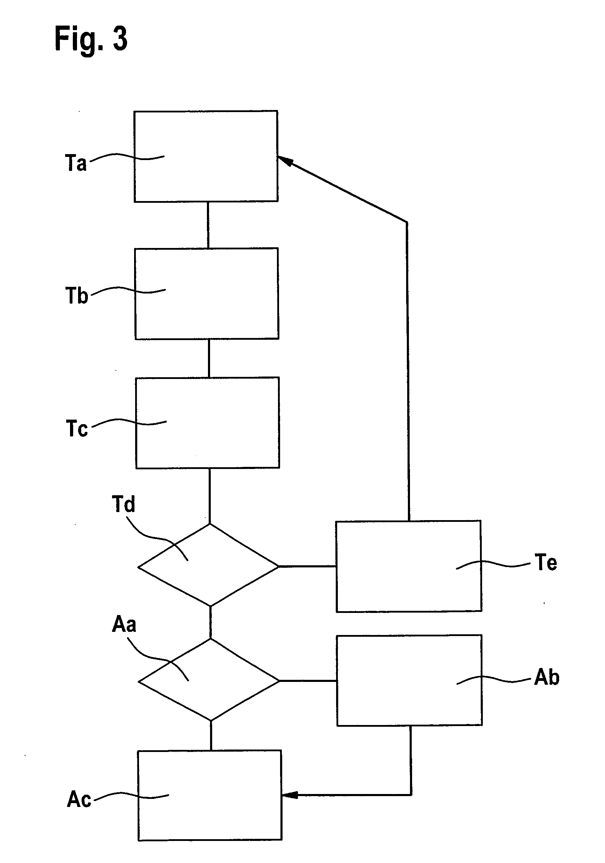

Die mit einer erfindungsgemäßen Werkzeugmaschinensteuerung, wie in Fig. 2 schematisch dargestellt, vorhandenen Möglichkeiten, sollen nochmals anhand eines Ablaufschemas, dargestellt in Fig. 3, erläutert werden.

Soll seitens einer Bedienungsperson eine Aktion mit einer von mehreren der Funktionseinheiten R1, S1, R2, L2, L3, L4 und S4 ausgeführt werden, so hat die Bedienungsperson die Möglichkeit, einen Testmodus in der Werkzeugmaschinensteuerung 10 aufzurufen und in diesem Testmodus in einem ersten Schritt Ta, die erste Datenweiche 46 in die Stellung DW1B und die zweite Datenweiche 48 in die Stellung DW2B zu bringen.

In dieser Stellung der zweiten Datenweiche 48 sind die Achsantriebssteuereinheiten 30 deaktiviert, so daß eine Fehlbedienung oder eine nicht zulässige vorgegebene Aktion seitens der Bedienungsperson an der manuellen Maschinenbedienungseinheit 36 keinerlei Schäden an der Werkzeugmaschine 12 anrichten kann.

Vielmehr kann die Bedienungsperson in einem Schritt Tb jede beliebige Bewegungsachse jeder beliebigen Funktionseinheit der Werkzeugmaschine anwählen und diese bewegen, was dazu führt, daß das Visualisierungssystem 52 im Rahmen des Maschinenbilds M die der Maschinenbedienungseinheit 36 vorgegebenen Aktionen als virtuelle Aktionen virtueller Funktionseinheiten darstellt.

Hat die Bewegung der virtuellen Funktionseinheit zu einer virtuellen Position geführt, die die Bedienungsperson im Maschinenbild M für günstig erachtet, so kann in einem Schritt Tc die Bedienungsperson den Auswahlbefehl AB auslösen, welcher dazu führt, daß die im Positionsdatenpuffer 56 gespeicherten aktuellen Positionsdaten AP in den sequentiellen Speicher 60 übernommen und als Endpositionsdaten EP einer Endposition gespeichert werden.

Damit ist das Ergebnis der manuellen Bewegung einer virtuellen Funktionseinheit längs einer virtuellen Achse festgehalten.

Der Auswahlbefehl AB kann dabei entweder über die Tastatur 24 eingegeben werden oder er kann durch die manuelle Maschinenbedieneinheit 36 ausgelöst werden, dann nämlich, wenn von einer Bewegungsachse auf eine andere Bewegungsachse oder von einer Funktionseinheit auf eine andere Funktionseinheit umgeschaltet wird.

In einem nächsten Schritt Td besteht nun die Möglichkeit für die Bedienungsperson entweder zu einem Schritt Te überzugehen, in welchem bei Änderung der Bewegungsachse der angewählten Funktionseinheit, eventuell auch Änderung des ausgewählten Teilsystems, ein Zurückspringen zum Schritt Ta zur Ausführung weiterer Aktionen erfolgt, wobei die weiteren Aktionen gemäß Schritt Tc zum Festhalten weiterer Endpositionsdaten weiterer Endpositionen in dem sequentiellen Speicher 60 führen und sich nach mehrfachem Zurückspringen zum Schritt Ta somit die Sequenz SQ von Endpositionsdaten EP aufeinanderfolgender Endpositionen aufbauen läßt.

Es besteht aber auch die Möglichkeit, vom Auswahlschritt Td in einen Auswahlschritt Aa eines Ausführungsmodus überzugehen, in welchem nunmehr durch Aktivieren des zweiten Datenschalters 62 mittels des Übergabebefehls UB eine Übergabe der Sequenz SQ der Endpositionsdaten EP in den Zwischenspeicher 32 der zentralen Prozessoreinheit 20 eingeleitet wird. Mit der Sequenz SQ von Endpositionsdaten EP im Zwischenspeicher 32 besteht nunmehr ausgehend vom Schritt Aa entweder die Möglichkeit in den Schritt Ab überzugehen, in welchem die erste Datenweiche 46 in die Stellung DW1A gebracht wird und die zweite Datenweiche 48 in die Stellung DW2B.

Im Schritt Ab wird nun durch die zentrale Prozessoreinheit 20 die Sequenz SQ von Endpositionsdaten EP im Zwischenspeicher 32 entsprechend den Endpositionsdaten, die im Rahmen eines üblichen Maschinensteuerprogrammes der Werkzeugmaschine erzeugt werden, abgearbeitet, wobei der Interpolator 34 achsbezogene Zielpositionsdaten umfassende Datensätze erzeugt, die dann über die erste Datenweiche 46 und die zweite Datenweiche 48 dem Visualisierungssystem 52 ebenfalls wieder übergeben werden.

Mit diesen Datensätzen werden von dem Visualisierungssystem 52 wiederum auf der Visualisierungseinheit 22 im Rahmen des Maschinenbildes M virtuelle Aktionen der virtuellen Funktionseinheiten dargestellt, so daß die Bedienungsperson nochmals die Möglichkeit hat, die in den Schritten Ta bis Td vorgegebenen Aktionen im Hinblick auf ihre Plausibilität und Kollisionsfreiheit im Rahmen der Werkzeugmaschine 12 zu überprüfen.

Nach der Überprüfung hat die Bedienungsperson die Möglichkeit, in einen Schritt Ac des Ausführungsmodus überzugehen, in welchem die zweite Datenweiche 48 in der Stellung DW2A steht und somit wie von dem Interpolator 14 ausgegebenen Datensätzen den Achsantriebssteuereinheiten 30 zur Bewegung der realen Achsen und realen Funktionseinheiten mit realen Aktionen übergeben werden. Es besteht aber auch die Möglichkeit, von dem Schritt Aa unmittelbar in den Schritt Ac überzugehen und den Schritt Ab, das heißt die Überprüfung der im Zwischenspeicher 32 gespeicherten Endpositionen durch das Visualisierungssystem 52, zu überspringen.

## Patentansprüche

1. Verfahren zur Steuerung einer Werkzeugmaschine (12) welche mehrere steuerbare Achsantriebe (AX, AY, AZ) für die Bewegung mindestens einer Funktionseinheit (R1, S1, R2, L3, L4, S4) mindestens eines Teilsystems (TS1, TS2, TS3, TS4) der Werkzeugmaschine (12) entlang von entsprechenden Bewegungsachsen (X, Y, Z, C) aufweist, wobei mittels einer manuellen Maschinenbedieneinheit (36) entsprechend einer manuellen Vorgabe von mindestens einer Aktion einer ausgewählten Funktionseinheit über ein Eingabefeld (40, 42) der manuellen Maschinenbedieneinheit (36) von einer Werkzeugmaschinensteuerung (10) Datensätze zu der mindestens einen Aktion der ausgewählten Funktionseinheit erzeugt werden,
**dadurch gekennzeichnet, daß** von einer Bedienungsüberprüfungseinheit (50) der Werkzeugmaschinensteuerung (10) die Datensätze zu der der manuellen Maschinenbedieneinheit (36) vorgegebenen mindestens einen Aktion der ausgewählten Funktionseinheit mittels eines Visualisierungssystems (52) in Form eines Maschinenbildes (M), welches alle für eine Bewegungsmöglichkeit der ausgewählten Funktionseinheit relevanten Einheiten (R1, S1, R2, L3, L4, S4, SX3) der Werkzeugmaschine (12) als virtuelle Einheiten zusammen mit einer der mindestens einen Funktionseinheit entsprechenden virtuellen Funktionseinheit und die vorgegebene Aktion als virtuelle Aktion zeigt, auf einer Visualisierungseinrichtung (22) dargestellt werden und daß die Datensätze der mindestens einen vorgegebenen Aktion gleichzeitig in einem Aktionenspeicher (54) gespeichert werden.

2. Verfahren nach Anspruch 1, **dadurch gekennzeichnet, daß** in einem Testmodus die Bedienungsüberprüfungseinheit (50) aktiviert und die Achsantriebssteuereinheiten (30) der den vorgegebenen Aktionen zugeordneten Bewegungsachsen deaktiviert werden.

3. Verfahren nach Anspruch 1 oder 2, **dadurch gekennzeichnet, daß** als Datensätze zu den vorgegebenen Aktionen Positionsdaten erzeugt werden.

4. Verfahren nach einem der voranstehenden Ansprüche, **dadurch gekennzeichnet, daß** aktuelle Positionsdaten (AP) der mit der virtuellen Funktionseinheit durch die virtuellen Aktionen angefahrenen virtuellen Positionen in dem Aktionenspeicher (54) abgespeichert werden.

5. Verfahren nach einem der voranstehenden Ansprüche, **dadurch gekennzeichnet, daß** bei einer Folge von vorgegebenen Aktionen die zuletzt vorliegenden aktuellen Positionsdaten (AP) der letzten virtuellen Position ausgewählt und als Endpositionsdaten (EP) gespeichert werden.

6. Verfahren nach Anspruch 5, **dadurch gekennzeichnet, daß** die als Endpositionsdaten (EP) zu speichernden Positionsdaten (AP) durch ein Auswahlbefehl (AB) ausgewählt werden.

7. Verfahren nach Anspruch 6, **dadurch gekennzeichnet, daß** die Werkzeugmaschinensteuerung (10) eine Eingabemöglichkeit (22) aufweist, mit welcher der Auswahlbefehl (AB) erzeugt wird.

8. Verfahren nach Anspruch 6 oder 7, **dadurch gekennzeichnet, daß** von der Maschinenbedieneinheit (36) bei einem Wechsel von einer Bewegungsachse zu einer anderen der Auswahlbefehl (AB) erzeugt wird.

9. Verfahren nach einem der Ansprüche 5 bis 8, **dadurch gekennzeichnet, daß** in dem Aktionenspeicher (52) eine Sequenz (SQ) der Endpositionsdaten (EP) erstellt wird.

10. Verfahren nach Anspruch 9, **dadurch gekennzeichnet, daß** in der Sequenz (SQ) die durch aufeinanderfolgende Auswahlbefehle (AB) ausgewählten aktuellen Positionsdaten (AP) in einer der Reihenfolge der Auswahlbefehle (AB) entsprechenden Reihenfolge von Endpositionsdaten (EP) niedergelegt werden.

11. Verfahren nach Anspruch 9 oder 10, **dadurch gekennzeichnet, daß** die Sequenz (SQ) der Endpositionsdaten (EP) durch einen Übergabebefehl (UB) einer zur Abarbeitung von Werkzeugmaschinensteuerungsprogrammen vorgesehenen zentralen Prozessoreinheit (20) der Werkzeugmaschinensteuerung (10) übergeben wird.

12. Verfahren nach einem der voranstehenden Ansprüche, **dadurch gekennzeichnet, daß** der Aktionenspeicher (54) einen Positionsdatenpuffer (56) umfaßt, in welchem die Positionsdaten der durch die virtuellen Aktionen angefahrenen virtuellen Positionen als aktuelle Positionsdaten (AP) gespeichert werden.

13. Verfahren nach einem der voranstehenden Ansprüche, **dadurch gekennzeichnet, daß** der Aktionenspeicher (54) einen sequentiellen Speicher (60) umfaßt, in welchem bei einem Auswahlbefehl (AB) die zuletzt im Positionsdatenpuffer (56) gespeicherten aktuellen Positionsdaten (AP) als Endpositionsdaten (EP) abgespeichert werden.

14. Verfahren nach Anspruch 13, **dadurch gekennzeichnet, daß** in dem sequentiellen Speicher (60) die bei aufeinanderfolgenden Auswahlbefehlen (AB) gespeicherten Endpositionsdaten in der Sequenz (SQ) aufeinanderfolgend gespeichert werden.

15. Verfahren nach einem der Ansprüche 11 bis 14, **dadurch gekennzeichnet, daß** die Sequenz (SQ) von Endpositionsdaten in einem Zwischenspeicher (32) für Endpositionsdaten der zentralen Prozessoreinheit (20) gespeichert wird.

16. Verfahren nach einem der Ansprüche 11 bis 15, **dadurch gekennzeichnet, daß** die der zentralen Prozessoreinheit (20) übergebene Sequenz (SQ) von Endpositionsdaten (EP) von der zentralen Prozessoreinheit (20) entsprechend der Reihenfolge der Endpositionsdaten (EP) in der Sequenz (SQ) selbsttätig abgearbeitet wird.

17. Verfahren nach Anspruch 16, **dadurch gekennzeichnet, daß** von der Prozessoreinheit durch Ermittlung und Übergabe von Datensätzen an die Bedienungsüberprüfungseinheit (50) virtuelle Aktionen der virtuellen Funktionseinheiten die Maschinenbilder erzeugt werden.

18. Verfahren nach Anspruch 16 oder 17, **dadurch gekennzeichnet, daß** von der Prozessoreinheit durch Ermittlung und Übergabe von Datensätzen an die Achsantriebssteuereinheiten (30) reale Aktionen der realen Funktionseinheiten (R1, S1, R2, L3, L4, S4) der Werkzeugmaschine (12) erzeugt werden.

19. Werkzeugmaschinensteuerung (10), welche mehrere steuerbare Achsantriebe (AX, AY, AZ) für eine Bewegung mindestens einer Funktionseinheit (R1, S1, R2, L3, L4, S4) mindestens eines Teilsystems (TS1, TS2, TS3, TS4) einer Werkzeugmaschine (12) entlang von entsprechenden Bewegungsachsen (X, Y, Z, C) aufweist, wobei die Werkzeugmaschinensteuerung (10) eine zentrale Prozessoreinheit (20) zur Abarbeitung eines Maschinensteuerprogramms für die Werkzeugmaschine (12), mindestens eine der zentralen Prozessoreinheit (20) zugeordnete Speichereinheit (26, 28), Achsantriebssteuereinheiten (30) für jeden der Achsantriebe (AX, AY, AZ) sowie eine manuelle Maschinenbedieneinheit (36) zur Erzeugung von Datensätzen zu mindestens einer Aktion einer ausgewählten Funktionseinheit mittels der Werkzeugmaschinensteuerung (10) entsprechend einer manuellen Vorgabe der mindestens einen Aktion der ausgewählten Funktionseinheit über ein Eingabefeld (40, 42) der manuellen Maschinenbedieneinheit (36) aufweist, **dadurch gekennzeichnet, daß** die Werkzeugmaschinensteuerung (10) eine Bedienungsüberprüfungseinheit (50) aufweist, welche die Datensätze zu der der manuellen Maschinenbedieneinheit (36) vorgegebenen Aktionen der ausgewählten Funktionseinheit mittels eines Visualisierungssystems (52) in Form eines Maschinenbildes (M), welches alle für die Bewegungsmöglichkeit der ausgewählten Funktionseinheit relevanten Einheiten der Werkzeugmaschine (12) als virtuelle Einheiten zusammen mit einer der ausgewählten Funktionseinheit entsprechenden virtuellen Funktionseinheit und die vorgegebene Aktion als virtuelle Aktion zeigt, auf einer Visualisierungseinrichtung (22) darstellt und die Datensätze zu den virtuellen Aktionen gleichzeitig in einem Aktionenspeicher (54) speichert.

20. Werkzeugmaschinensteuerung nach Anspruch 19, **dadurch gekennzeichnet, daß** die Werkzeugmaschinensteuerung (10) einen Testmodus aufweist, in welchem die Bedienungsüberprüfungseinheit (50) aktiviert und die Achsantriebssteuereinheiten (30) der zugeordneten Bewegungsachsen (X, Y, Z, C) deaktiviert sind.

21. Werkzeugmaschinensteuerung nach Anspruch 19, **dadurch gekennzeichnet, daß** die Bedienungsüberprüfungseinrichtung (50) und die Achsantriebssteuereinheiten (30) über eine Datenweiche (46) alternierend aktivierbar sind.

22. Werkzeugmaschinensteuerung nach einem der Ansprüche 19 bis 21, **dadurch gekennzeichnet, daß** der Aktionenspeicher (54) aktuelle Positionsdaten (AP) der mit der virtuellen Funktionseinheit durch die virtuellen Aktionen angefahrenen virtuellen Positionen erfaßt.

23. Werkzeugmaschinensteuerung nach Anspruch 22, **dadurch gekennzeichnet, daß** in dem Aktionenspeicher (54) bei einer Folge von virtuellen Aktionen die zuletzt vorliegenden aktuellen Positionsdaten (AP) der virtuellen Positionen ausgewählt und als Endpositionsdaten (EP) gespeichert werden.

24. Werkzeugmaschinensteuerung nach Anspruch 23, **dadurch gekennzeichnet, daß** die als Endpositionsdaten (EP) zu speichernden aktuellen Positionsdaten (AP) durch ein Auswahlbefehl (AB) auswählbar sind.

25. Werkzeugmaschinensteuerung nach Anspruch 24, **dadurch gekennzeichnet, daß** die Werkzeugmaschinensteuerung (10) eine Eingabemöglichkeit (22) zur Erzeugung des Auswahlbefehls (AB) aufweist.

26. Werkzeugmaschinensteuerung nach Anspruch 24 oder 25, **dadurch gekennzeichnet, daß** die Maschinenbedieneinheit (36) bei einem Wechsel von einer Bewegungsachse (X, Y, Z, C) zu einer anderen den Auswahlbefehl (AB) erzeugt.

27. Werkzeugmaschinensteuerung nach einem der Ansprüche 23 bis 26, **dadurch gekennzeichnet, daß** der Aktionenspeicher (54) eine Sequenz (SQ) der Endpositionsdaten (EP) erstellt.

28. Werkzeugmaschinensteuerung nach Anspruch 27, **dadurch gekennzeichnet, daß** die Sequenz (SQ) die durch aufeinanderfolgende Auswahlbefehle (AB) ausgewählten aktuellen Positionsdaten (AP) in einer der Reihenfolge der Auswahlbefehle (AB) entsprechenden Reihenfolge von Endpositionsdaten (EP) umfaßt.

29. Werkzeugmaschinensteuerung nach Anspruch 27 oder 28, **dadurch gekennzeichnet, daß** die Sequenz (SQ) der Endpositionsdaten (EP) durch ein Übergabebefehl (UB) der zur Abarbeitung von Werkzeugmaschinensteuerungsprogrammen vorgesehenen zentralen Prozessoreinheit (20) der Werkzeugmaschinensteuerung (10) übergebbar ist.

30. Werkzeugmaschinensteuerung nach einem der Ansprüche 19 bis 29, **dadurch gekennzeichnet, daß** der Aktionenspeicher (54) einen Positionsdatenpuffer (56) umfaßt, mit welchem die aktuellen Positionsdaten (AP) der durch die virtuellen Aktionen angefahrenen virtuellen Positionen speicherbar sind.

31. Werkzeugmaschinensteuerung nach einem der Ansprüche 19 bis 30, **dadurch gekennzeichnet, daß** der Aktionenspeicher (54) einen sequentiellen Speicher (60) umfaßt, in welchem bei einem Auswahlbefehl (AB) die zuletzt im Positionsdatenpuffer (56) gespeicherten aktuellen Positionsdaten abspeicherbar sind.

32. Werkzeugmaschinensteuerung nach Anspruch 31, **dadurch gekennzeichnet, daß** der sequentielle Speicher (60) die bei aufeinanderfolgenden Auswahlbefehlen (AB) gespeicherten aktuellen Positionsdaten in der Sequenz (SQ) der Endpositionsdaten (EP) aufeinanderfolgend speichert.

33. Werkzeugmaschinensteuerung nach einem der Ansprüche 19 bis 32, **dadurch gekennzeichnet, daß** die zentrale Prozessoreinheit (20) einen Zwischenspeicher (32) zur Aufnahme von abzuarbeitenden Endpositionsdaten (EP) umfaßt.

34. Werkzeugmaschinensteuerung nach Anspruch 33, **dadurch gekennzeichnet, daß** die zentrale Prozessoreinheit (20) die im Zwischenspeicher (32) gespeicherten Endpositionsdaten (EP) selbständig abarbeitet.
